Europäisches Patentamt

European Patent Office

Office européen des brevets

(19)

(11) **EP 1 571 509 A1**

(12) ## EUROPEAN PATENT APPLICATION

(43) Date of publication:
**07.09.2005 Bulletin 2005/36**

(51) Int Cl.7: **G05B 13/04**

(21) Application number: **04258055.5**

(22) Date of filing: **22.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **02.03.2004 US 791597**

(71) Applicant: **GENERAL ELECTRIC COMPANY**
**Schenectady, NY 12345 (US)**

(72) Inventors:
- **Brunell, Brent Jerome**
  **Clifton Park New York 12065 (US)**
- **Kumar, Aditya**
  **Schenectady New York 12303 (US)**

(74) Representative: **Goode, Ian Roy et al**
**London Patent Operation**
**General Electric International, Inc.**
**15 John Adam Street**
**London WC2N 6LU (GB)**

(54) **Model-based control systems and methods for gas turbine engines**

(57)     A method and system of controlling a gas turbine engine (110) is disclosed. The engine (110) has sensors to detect one or more parameters and actuators adapted to respond to commands. The method includes receiving data from the sensors of the engine (110) for one or more measured or sensed parameters, estimating a state of the engine (110) by estimating one or more unmeasured or unsensed parameters using the data from the sensors and a predictive model (130) of the engine, generating commands for the actuators based on the state using an optimization algorithm (150); and transmitting the commands to the engine (110). The system includes a state estimator (120) adapted to estimate a state of the engine (110) by estimating one or more unmeasured or unsensed parameters using data from the sensors of the engine (110) for one or more measured or sensed parameters. The estimator (120) includes a model (130) of the engine (110). The system also includes a control module (140) adapted to generate commands for the actuators based on the state. The control module (140) includes an optimization algorithm (150) for determining the commands.

EP 1 571 509 A1

FIGURE 3

**Description**

The present invention relates generally to systems and methods for controlling a gas turbine engine. More specifically, the present invention relates to adaptive model-based control systems and methods that maximize capability after deterioration, fault, failure or damage to one or more engine components or systems so that engine performance and/or operability can be optimized.

Mechanical and electrical parts and/or systems can deteriorate, fail or be damaged. Any component in a gas turbine system, including engine components, sensors, actuators, or any of the engine subsystems, is susceptible to degradation, failure or damage that causes the engine to move away from nominal conditions. The effect that these upsets have on the gas turbine performance ranges from no effect (e.g., possibly due to a single failed sensor in a multi-sensor system) to a total loss of engine power or thrust control (e.g., for a failed actuator or damaged engine component). Control systems of gas turbine engines may be provided to detect such effects or the cause of such effects and attempt to compensate.

Currently, gas turbine systems rely on sensor-based control systems, in which operating goals and limits are specified and controlled in terms of available sensed parameters. Online engine health management is typically limited to sensor failure detection (e.g., range and rate checks), actuator position feedback errors, and some selected system anomaly checks, such as stall detection, rotor overspeed, and other such indications of loss of power or thrust control. When an engine component or system fails or deteriorates, control of the component/system is handled on an individual basis (i.e., each component/system is controlled by its own control regulator or heuristic open-loop logic).

It is believed that presently no adequate adaptive model-based control systems and methods are available.

One embodiment of the invention relates to a method of controlling a gas turbine engine. The engine has sensors to detect one or more parameters and actuators adapted to respond to commands. The method includes receiving data from the sensors of the engine for one or more measured or sensed parameters, estimating a state of the engine by estimating one or more unmeasured or unsensed parameters using the data from the sensors and a predictive model of the engine, generating commands for the actuators based on the state using an optimization algorithm, and transmitting the commands to the engine.

Another embodiment of the invention relates to a system for controlling a gas turbine engine, the engine having sensors to detect one or more parameters and actuators adapted to respond to commands. The system includes a state estimator adapted to estimate a state of the engine by estimating one or more unmeasured or unsensed parameters using data from the sensors of the engine for one or more measured or sensed parameters. The estimator includes a model of the engine. The system also includes a control module adapted to generate commands for the actuators based on the state. The control module includes an optimization algorithm for determining the commands.

Embodiments of the invention will now be described, by way of example, with reference to the accompanying drawings, in which:

Figure 1 is a schematic diagram showing the layout of an engine that may be controlled by a system or method according to an embodiment of the invention;

Figure 2 is a diagram illustrating the concept of receding horizon control implemented in an embodiment of the present invention; and

Figure 3 is a schematic illustration of a control arrangement according to an embodiment of the present invention.

Embodiments of the present invention provide control systems and methods wherein the models, optimizations, objective functions, constraints and/or parameters in the control system modify, update and/or reconfigure themselves whenever any engine component or system moves away from nominal so that as much performance and/or operability as possible can be regained. Further, systems and methods according to embodiments of the present invention provide that the control system updates itself in real-time. The systems and methods may be automated using a computer. Embodiments of the present invention may take information about detected deterioration, faults, failures and damage and incorporate such information into the proper models, optimizations, objective functions, constraints and/or parameters in the control system to allow the control system to take optimized action given the current engine condition. Such systems and methods may allow any level of deterioration, faults, failures or damage to be accommodated, and not just deterioration, faults, failures or damage that have *a priori* solutions already programmed into the system. Furthermore, embodiments of the present invention may be capable of being used to control gas turbines, such as the gas turbines in an aircraft engine, power plant, marine propulsion, or industrial application.

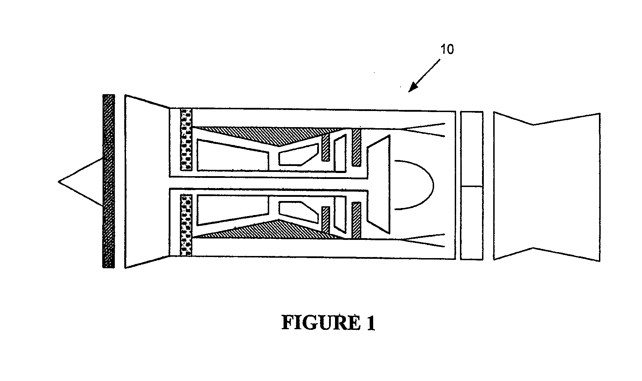

Figure 1 illustrates a schematic of a layout of an engine 10 as well as the station designations, sensors, and actuators for the engine 10. The engine 10 is an aerodynamically coupled, dual rotor machine wherein a low-pressure rotor system (fan and low-pressure turbine) is mechanically independent of a high-pressure (core engine) system. Air entering the inlet is compressed by the fan and then split into two concentric streams. One of these streams then enters the high-pressure compressor and proceeds through the main engine combustor, high-pressure turbine, and low-pressure turbine. The other stream is directed through an annular duct and then recombined with the core flow, downstream of the low-pressure turbine, by means of a convoluted chute device. The combined streams then enter the augmenter to a convergent-divergent, variable area exhaust nozzle where the flow is pressurized, expanded and accelerated rearward into the atmosphere, thereby generating thrust.

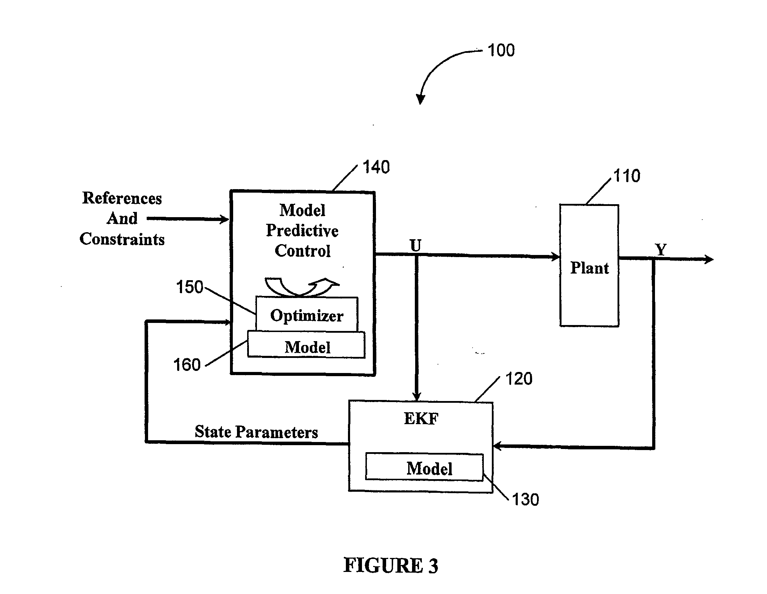

The various actuators of the engine 10 are controlled through actuation inputs from a controller, such as the model predictive controller described below with reference to Figure 3. The various sensors provide measured or sensed values of parameters for monitoring and use by one or more systems. For example, the sensed and measured values may be used to estimate values of unsensed and unmeasured parameters using a state estimator, as described below with reference to Figure 3.

It will be understood by those skilled in the art that the disclosed embodiments may be applicable to a variety of systems and are not limited to engines similar to that illustrated in Figure 1.

During normal operation, such engines can experience large variations in operating parameters, such as ambient temperature, pressure, Mach number and power output level. For each of these variations, the change in engine dynamics includes a significant nonlinear component. A control system and method for such an engine must adapt to such non-linear changes.

Control systems adapted to provide control of such engines have been described in U.S. Patent Application Serial No. 10/306,433, GE Dkt. No. 124447, entitled "METHODS AND APPARATUS FOR MODEL PREDICTIVE CONTROL OF AIRCRAFT GAS TURBINE ENGINES," filed November 27, 2002, and U.S. Patent Application Serial No. 10/293,078, GE Dkt. No. 126067, entitled "ADAPTIVE MODEL-BASED CONTROL SYSTEMS AND METHODS FOR CONTROLLING A GAS TURBINE," filed November 13, 2002.

A nonlinear model predictive control (NMPC) algorithm can explicitly handle relevant aircraft engine control issues in a single formulation. NMPC is a nonlinear, multi-input, multi-output algorithm capable of handling both input and output constraints. Embodiments of the present invention use a dynamic model of the system to determine the response of the engine to control inputs over a future time horizon. The control actions are determined by a constrained online optimization of these future responses, as described in detail below with reference to Figure 3.

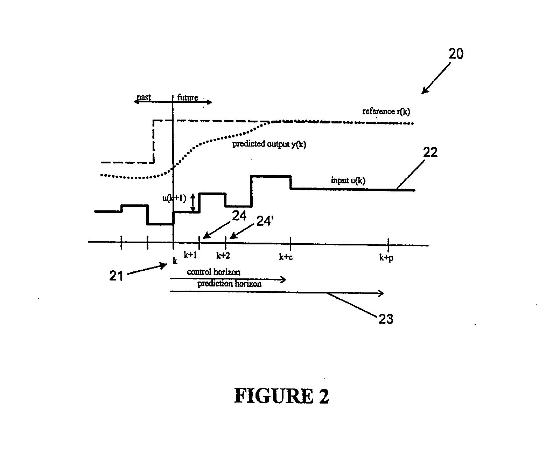

The concept of receding horizon control 20 is illustrated in Figure 2. At time $k$ 21, the input variables 22 ($u(k)$, $u(k+1)$, ..., $u(k+p-1)$) are selected to optimize a performance criterion over the prediction horizon 23 ($p$). Of the computed optimal control moves, only the values for the first sample ($u(k)$), are actually implemented. Before the next time interval 24, 24' and calculation of another $p$ input value (i.e., at $u(k+1)$, $u(k+2)$, ..., $u(k+p)$), the initial state is re-estimated from output measurements. This causes the seemingly open-loop strategy to actually implement a closed-loop control. For further details, reference may be made to J.M. Maciejowski, Predictive Control with Constraints, Prentice-Hall London, 2002.

Figure 3 illustrates a control arrangement implementing NMPC according to an embodiment of the invention. The control system 100 is adapted to monitor and control the physical engine plant 110 to provide substantially optimal performance under nominal, off-nominal and failure conditions, for example. "Optimal performance" may refer to different qualities under different conditions. For example, under normal flight, optimal performance may refer to maximizing fuel efficiency, while under a failure condition, optimal performance may refer to maximizing operability of the engine through maximum thrust.

The plant 110 includes sensors which sense or measure values Y of certain parameters. These parameters may include, for example, fan speed, pressures and pressure ratios, and temperatures. The plant also includes a plurality of actuators which are controlled by command inputs U. The plant may be similar to the engine illustrated in Figure 1, for example.

The values Y of the sensed or measured parameters are provided to a state estimator 120. The use of NMPC requires that values of all states must be available. This is required since NMPC is a full state feedback controller. Availability of sensed or measured data is generally limited due to lack of sensors. To accommodate the requirements of the NMPC, embodiments of the present invention implement an Extended Kalman Filter (EKF) for estimating values of unmeasured or unsensed parameters. The EKF is described below in greater detail.

The state estimator 120 includes a model 130 of the plant 110. The model 130 is used by the state estimator 120 to generate state parameters which include estimates of unmeasured and unsensed parameters. In a particular embodiment, the model 130 is a simplified real-time model (SRTM), described in further detail below. The SRTM is a non-linear model that can be linearized for use by the state estimator to determine Kalman gain values.

The state parameters from the state estimator 120 are transmitted to a model-based predictive control module 140. The control module 140 uses the state parameters to perform an optimization to determine commands for the actuators of the plant 110. In this regard, the control module 140 includes an optimizer 150 and a model 160. The model 160 may be identical to the model 130 in the state estimator 120. In a particular embodiment, both models 130, 160 are the SRTM. Using the SRTM, rather than a detailed, physics-based model allows the optimization to converge rapidly. In a particular embodiment, the optimizer 150 includes a quadratic programming algorithm to optimize an objective function under given constraints. The optimizer determines the optimum values of control variables (i.e., actuator commands), and allows constraints to be specified relating to certain engine parameters, such as maximum temperatures, altitude and Mach number, while maximizing or minimizing an objective function, such as fuel efficiency or thrust. It is noted that, in an embodiment of the invention, constraints and objective function may include any of the state parameters, whether sensed, measured, unsensed or unmeasured. An exemplary formulation for the optimizer is described below.

MODEL

Physics-based, component-level models (CLM) have been employed for various applications, including certain control systems. A CLM is generally a complicated, iterative model. Such a model may require extensive processing when used in an optimizer, for example, thereby delaying convergence of the optimization. In this regard, a non-linear, analytic and non-iterating model may be implemented. This model is referred to herein as a simple real-time model (SRTM). In a particular embodiment, this model is used in both the state estimator 120 and the control module 140.

An exemplary SRTM for implementation of embodiments of the present invention has inputs including the 1) fuel flow demand, 2) exhaust nozzle area demand, 3) altitude, 4) Mach, and 5) delta from ambient temperature. The first two inputs correspond to actuator commands U from the control module 140, while the remaining three correspond to measured or sensed outputs Y from the plant 110. It is noted that these inputs are only exemplary and that other combinations of inputs are contemplated within the scope of the invention.

The outputs of the SRTM include estimates for certain unmeasured and unsensed parameters. These output parameters may include core speed, fan speed, fan inlet pressure, fan exit pressure, compressor inlet pressure, compressor discharge static pressure, compressor discharge total pressure, fan airflow, compressor airflow, fan inlet temperature, compressor inlet temperature, high pressure turbine exit temperature, fan stall margin, core stall margin, and thrust.

An embodiment of the SRTM model depends on tables of steady state data to define the steady state relationships between states and inputs and on transient gains to represent the transient relationships. The model may be established in the following manner.

First, the dynamics of the inertias are modeled. The two main states of the model represent the fan and core spool inertias. The first input modeled is the corrected fuel flow input (wfr). Then the model is changed to account for exit area demand as an additional input. The steady state curves may then be generated. With the primary states and inputs established, other outputs and other inputs are added to the model. With the model structure created and all of the steady state relationships defined, the transient 'k' parameters may then be determined through system identification techniques.

The embodiment of the SRTM considers the low-pressure and high-pressure spool speeds as two of the energy storage components, or the states of the model. These speeds can change state if an unbalanced torque is applied. Simply put, the speed increments of the engine are the integral of the surplus torques. This is stated mathematically as:

$$\frac{d\omega}{dt} = \frac{1}{I}\sum_{i=1}^{J} Q_i \ , \qquad\qquad\qquad \text{(Eq. 1)}$$

where $\frac{d\omega}{dt}$ is the spool angular acceleration, J is the number of unbalanced torques, $I$ is the spool inertia, and $Q_i$ is the $i^{th}$ torque. The origin of the torques is based on the concept that if the value of an input or other state is different than what the local state is expecting at steady state, then it will apply an unbalanced torque to the local state. Using this information and Eq. 1, this idea is expressed for LP spool speed (pcn2) , and the HP spool speed (pcn25) as:

$$\dot{pcn2} = k2*(pcn25 - gpcn25) + kwfn2*(wf - gwfn2)\,, \qquad\qquad \text{(Eq. 2)}$$

$$\dot{pcn25} = k25 * (pcn2 - gpcn2) + kwfn25 * (wf - gwfn25),$$ (Eq. 3)

where $\dot{pcn2}$ and $\dot{pcn25}$ are the angular acceleration of the low-pressure and high-pressure spools, respectively, the g parameters are based on steady state relationships, and the k parameters are derived from transient data. Working through Eq. 2, each of the terms is described as follows:

- k2 represents the aerodynamic influence of the HP spool on the LP spool acceleration,

- gpcn25 is the steady state value of pcn25 based on pcn2,

- kwfn2 is the influence of a change in wf on the LP spool acceleration,

- gwfn2 is the steady state value of wf based on the value of pcn2.

- Similarly for Eq. 3,

- k25 represents the aerodynamic influence of the LP spool on the HP spool acceleration,

- gpcn2 is the steady state value of pcn2 based on pcn25,

- kwfn25 is the influence of a change in wf on the HP spool acceleration,

- gwfn25 is the steady state value of wf based on the value of pcn25.

The two control outputs from the control module are fuel flow demand and exhaust nozzle area demand. The engine model inputs are fuel flow and exit area. Between the commands from the control and the physical inputs to the engine are the inner-loop control algorithm and the actuators. The models of the inner loop controls and actuator dynamics for both the fuel metering valve and exhaust nozzle are created.

As noted above, in a particular embodiment, the SRTM is used as a predictive model in both the state estimator and the control module. The state estimator of one embodiment is an Extended Kalman Filter (EKF) that uses the SRTM in its nonlinear form (described above) for the time update calculation. A linearized version of the SRTM is used by the EKF for the Kalman gain calculation. Similarly, the control module of one embodiment, using a quadratic programming algorithm, depends on a linear SRTM model to define the relationships between future control actions and future engine responses.

A linearized version of the SRTM is obtained as follows. The SRTM can be described in general as a nonlinear ordinary differential equation (ODE):

$$\dot{x}_t = f(x_t, u_t),$$ (Eq.4)

with the states $x_t$ and the inputs $u_t$. Taylor's theorem is used to linearize the solution about the current $(\bar{x}_t, \bar{u}_t)$ value. Introducing the deviation variables $(\tilde{x}_t, \tilde{u}_t)$,

$$x_t = \bar{x}_t + \tilde{x}_t, \quad u_t = \bar{u}_t + \tilde{u}_t$$ (Eq. 5)

yields the following standard Taylor's expansion for the ODE in Eq. 4:

$$\dot{x}_t = \dot{\overline{x}}_t + \dot{\widetilde{x}}_t = f(\overline{x}_t, \overline{u}_t) + \frac{\partial f}{\partial x}\bigg|_{\overline{x},\overline{u}} \widetilde{x}_t + \frac{\partial f}{\partial u}\bigg|_{\overline{x},\overline{u}} \widetilde{u}_t \,. \qquad \text{(Eq. 6)}$$

This ODE describes how the solution $x_t$ evolves with control $u_t$ in comparison with the nominal solution $\overline{x}_t$ from control $\overline{u}_t$. The linearized system is then represented by:

$$\dot{\widetilde{x}}_t = \frac{\partial f}{\partial x}\bigg|_{\overline{x},\overline{u}} \widetilde{x}_t + \frac{\partial f}{\partial u}\bigg|_{\overline{x},\overline{u}} \widetilde{u} + f(\overline{x}_t, \overline{u}_t) - \dot{\overline{x}}. \qquad \text{(Eq. 7)}$$

In the above ODE, $\dot{\overline{x}} \colon = 0$ , since $\overline{x}_t$ is a constant denoting the current value of the states.
Moreover, for linearization about steady-state equilibrium solutions, $f(\overline{x},\overline{u}) = 0$, and thus, there is no additive term $f(\overline{x}_t,\overline{u}_t)$. However, when linearizing about an arbitrary current point $(\overline{x}_t,\overline{u}_t)$, this additive term is a non-zero term that is constant over the timeframe of evolution of the linearized system.
In addition to the ODE system in Eq. 4 that describes the dynamics of the system, we also linearize the output relations for both the measured outputs $z_t$ and the controlled outputs $y_t$ :

$$\begin{aligned} z_t &= h_m(x_t, u_t) \\ y_t &= h_c(x_t, u_t) \end{aligned} \qquad \text{(Eq. 8)}$$

using a similar Taylor's series expansion about the current values:

$$\begin{aligned} \widetilde{z}_t &= z_t - \overline{z}_t = \frac{\partial h_m}{\partial x}\bigg|_{\overline{x},\overline{u}} \widetilde{x}_t + \frac{\partial h_m}{\partial u}\bigg|_{\overline{x},\overline{u}} \widetilde{u}_t \\ \widetilde{y}_t &= y_t - \overline{y}_t = \frac{\partial h_c}{\partial x}\bigg|_{\overline{x},\overline{u}} \widetilde{x}_t + \frac{\partial h_c}{\partial u}\bigg|_{\overline{x},\overline{u}} \widetilde{u}_t \end{aligned} \qquad \text{.(Eq. 9)}$$

Using the above, the identity $\overline{y} = h(\overline{x}_t,\overline{u}_t)$, and the following substitutions:

$$\begin{aligned} A_c &= \frac{\partial f}{\partial x}\bigg|_{\hat{x},\overline{u}}, \quad B_c = \frac{\partial f}{\partial u}\bigg|_{\hat{x},\overline{u}}, \\ C &= \frac{\partial h_c}{\partial x}\bigg|_{\hat{x},\overline{u}}, \quad D = \frac{\partial h_c}{\partial u}\bigg|_{\hat{x},\overline{u}} \end{aligned} \qquad \text{(Eq. 10)}$$

the linear model is derived:

$$\dot{\tilde{x}}_t = A_c \tilde{x}_t + B_c \tilde{u}_t + f$$
$$\tilde{y}_t = C\tilde{x}_t + D\tilde{u}_t. \qquad \text{(Eq. 11)}$$

Finally, when the control solution $\tilde{u}_{t+\tau}$ is determined it should be interpreted as additive to the constant current input, so that $u_{t+\tau} = \bar{u}_t + \tilde{u}_{t+\tau}$ .

It is important to note the f term in Eq. 11. This term represents the free response of the plant.

Thus, the embodiment of the SRTM provides simplified model that provides accurate and rapid convergence of the optimization. The model can be linearized for certain purposes.

The linear model in Eq. 11 is discretized in time using the sample time $T_s$ to obtain the linear discrete-time model:

$$\tilde{x}_{t+1} = A\tilde{x}_t + B\tilde{u}_t + F$$
$$\tilde{y}_t = C\tilde{x}_t + D\tilde{u}_t \qquad , \qquad \text{(Eq. 12)}$$

where

$$A=I+A_c T_s, \ B=B_c T_s, \ F=f(\hat{x}_t, \bar{u}_t) T_s. \qquad \text{(Eq.13)}$$

EXTENDED KALMAN FILTER

The state estimator implemented in a particular embodiment is an Extended Kalman Filter (EKF). The EKF is a nonlinear state estimator, which is based on a dynamical system model. While the model underpinning the EKF is nonlinear, the recursion is based on a linear gain computed from the parameters of the linearized SRTM model. Thus the design concepts inherit much from the realm of Kalman Filtering.

The EKF need not provide the truly optimal state estimate to the controller in order to operate adequately well. It is usually a suboptimal nonlinear filter in any case. However, its role in providing the state estimates to the NMPC for correct initialization is a key feature of the control module.

For the EKF analysis, the SRTM is described by:

$$\dot{x}_t = f(x_t, u_t) + w_t$$
$$y_{k\Delta t} = h(x_{k\Delta t}, u_{k\Delta t}) + v_{k\Delta t} \qquad , \qquad \text{(Eq. 14)}$$

where the measurement y arrives at every $\Delta t$ seconds and the white noise variables $w$ and $v$ represent the process and measurement noises, respectively. This is a continuous-time dynamical system with discrete-time (sampled) measurements.

The EKF equations can be written in predictor-corrector form. For the state estimation case, the predictor or time-update equations using Euler integration to move from continuous to discrete time are:

$$\hat{x}_{k+1}^- = \hat{x}_k + \Delta t \ f(x_k, u_k)$$
$$P_{k+1}^- = A_k P_k A_k' + W \qquad , \qquad \text{(Eq. 15)}$$

where $\hat{x}P\text{-}_{k+1}$ is *a priori* to the measurement step state estimate, $P^-_{k+1}$ is the *a priori* estimate error covariance, $W$ is the discrete-time process noise covariance (after scaling by $\Delta$t), and $A_k$ is the discrete-time transition of the linearized system, or:

$$A_k = I + A_c T_s \qquad \text{(Eq.16)}$$

The linear discrete time measurement matrix C is defined as:

$$C_k = \frac{\partial h}{\partial x}(x^-_{k+1}, p_k, u_k). \qquad \text{(Eq.17)}$$

Next the Kalman filter gain is computed using:

$$K = P^-_{k+1} C_k'(R + C_k P^-_{k+1} C_k')^{-1} \qquad \text{(Eq.18)}$$

The corrector or measurement update equations are:

$$\hat{x}_{k+1} = \hat{x}^-_{k+1} + K\left(y_k - h(\hat{x}^-_{k+1}, p_k, u_k)\right)$$
$$P_{k+1} = P^-_{k+1} - K\left(R + C_k P^-_{k+1} C_k'\right)^{-1} K'. \qquad \text{(Eq. 19)}$$

OPTIMIZER FORMULATION

Embodiments of the control module include an optimizer adapted to maximize or minimize an objective function while satisfying a given set of constraints. In one embodiment, the optimizer uses a quadratic programming algorithm. As described above, the control module uses a dynamic model of the plant to perform simulations over a specific horizon, the model being the SRTM in one embodiment.

In an exemplary embodiment, the control module is designed to control the fan speed *PCN2R,* and the pressure ratio *DPP* ($y_{1t}$=*PCN2R,* $y_{2t}$=*DPP*) using the combustor fuel flow, *fmvdmd,* and the afterburner, *a8×dmi* as the manipulated inputs ($u_{1t}$=*fmvdmd,* $u_{2t}$ = *a8×dmi*), subject to magnitude and slew rate constraints imposed by the hardware limits on the actuators for the two manipulated inputs. In addition to these constraints, the optimization in the control module will also be performed subject to other operational/safety constraints like stall margin, combustor blowout, maximum T4B, minimum and maximum PS3, maximum N25.

A quadratic programming (QP) algorithm with the linearized dynamic model is used along with a quadratic objective function and linear constraints. The QP problem is convex and can be solved readily with available QP software. Moreover, since the linearization is performed repeatedly at each time sample about the corresponding operating point, it accounts for the nonlinearities encountered during dynamic transients over the flight envelope. To implement the control module using the QP formulation, the nonlinear SRTM is linearized about the current state estimate $\hat{x}_t$ obtained by the EKF and the current inputs $\bar{u}_{t-1}$, and then discretized in time using the sample time $T_s$, to obtain the linear discrete-time model.

The main control objective is to track changes in the references for the two controlled outputs. The optimization objective function is postulated as a standard quadratic function to be minimized over a future prediction horizon *nh,* using the piecewise constant inputs over a future control horizon nc. More specifically, the objective function to be minimized is:

$$J_{LQ} = \frac{1}{2}\left\{ \sum_{i=1}^{nh} \Delta\widetilde{y}_{t+i}^{T} Q \Delta\widetilde{y}_{t+i} + \sum_{i\approx1}^{nc} \Delta u_{t+i-1}^{T} R \Delta u_{t+i-1} \right\}$$

$$= \frac{1}{2}\left\{ \left( \Delta\widetilde{y}_{t+1}^{T} Q^{\frac{1}{2}} \quad \cdots \quad \Delta\widetilde{y}_{t+nh}^{T} Q^{\frac{1}{2}} \right) \begin{pmatrix} Q^{\frac{1}{2}}\Delta\widetilde{y}_{t+1} \\ \vdots \\ Q^{\frac{1}{2}}\Delta\widetilde{y}_{t+nh} \end{pmatrix} + \left( \Delta u_{t}^{T} R^{\frac{1}{2}} \quad \cdots \quad \Delta u_{t+nc-1}^{T} R^{\frac{1}{2}} \right) \begin{pmatrix} R^{\frac{1}{2}}\Delta u_{t} \\ \vdots \\ R^{\frac{1}{2}}\Delta u_{t+nc-1} \end{pmatrix} \right\}$$

(Eq. 20)

where

$$\Delta\widetilde{y}_{t+i} = \widetilde{y}_{r,t+i} - \widetilde{y}_{t+i}$$

denotes the error between the output reference and the predicted output at a future sample *t+i*,

$$\Delta u_{t+i} = u_{t+i} - u_{t+i-1} = \Delta\widetilde{u}_{t+i} \approx \widetilde{u}_{t+i} - \widetilde{u}_{t+i-1}$$

denotes the change in the manipulated inputs at sample *t+i* relative to the value of the inputs at the previous sample, and *Q* and *R* are symmetric positive definite weighting matrices. The weighting matrices *Q* and R and the prediction and control horizons *nh, nc,* respectively are tuned for optimal performance and stability. The objective function is to be minimized as a function of the future control action values $\widetilde{u}_{t+i-}$ *i* = 1,..., *nc* assuming that

$$\widetilde{u}_{t+i-1} = \widetilde{u}_{t+nc-1}, i = nc + 1,..., nh.$$

The objective function is calculated over the future prediction horizon *nh* using a linear discrete time model.

The predicted values of the outputs $\widetilde{y}_{t+i}$ in terms of deviations from the current measured value $\bar{y}_{t}$ are given by the following relation:

$$\tilde{Y}_e = \begin{bmatrix} \tilde{y}_{t+1} \\ \vdots \\ \tilde{y}_{t+nh} \end{bmatrix} = C_e \begin{bmatrix} \tilde{x}_{t+1} \\ \vdots \\ \tilde{x}_{t+nh} \end{bmatrix}, \quad \text{where} \quad C_e = (I_{nh} \otimes C)$$

$$= C_e \left\{ \begin{bmatrix} A \\ \vdots \\ A^{t+nh} \end{bmatrix} \tilde{x}_t + \begin{bmatrix} B & 0 & \cdots & 0 \\ AB & B & \ddots & \vdots \\ \vdots & \vdots & \ddots & 0 \\ A^{t+nh-1}B & \cdots & AB & B \end{bmatrix} \begin{bmatrix} \tilde{u}_t \\ \tilde{u}_{t+1} \\ \vdots \\ \tilde{u}_{t+nh} \end{bmatrix} + \begin{bmatrix} F \\ \sum_{i=1}^{2} A^{i-1}F \\ \vdots \\ \sum_{i=1}^{nh} A^{i-1}F \end{bmatrix} \right\} \quad \text{(Eq. 21)}$$

$$= C_e \left\{ A_e \tilde{x}_t + AB_e * \begin{bmatrix} & I_{nc} & \\ 0_{nh-nc+1 \text{ x } nc-1} & 1_{nh-nc+1 \text{ x } 1} \end{bmatrix} \begin{bmatrix} \tilde{u}_t \\ \tilde{u}_{t+1} \\ \vdots \\ \tilde{u}_{t+nc} \end{bmatrix} + AF_e \right\}$$

$$= C_1 \tilde{x}_t + C_2 \tilde{U}_e + C_3 = C_2 \tilde{U}_e + C_3$$

Note that by its definition, $\tilde{x}_t = 0$, which is utilized in the above relation to obtain the predicted outputs $\tilde{Y}_e$ over the prediction horizon $nh$, as a linear function of the future control action $\tilde{U}_e$ over the control horizon nc. Moreover, the changes in the control inputs

$$\Delta u_{t+i} = \tilde{u}_{t+i} - \tilde{u}_{t+i-1}$$

are denoted by the following compact relation:

$$\begin{bmatrix} \Delta u_t \\ \Delta u_{t+1} \\ \vdots \\ \Delta u_{t+nc} \end{bmatrix} = \begin{bmatrix} 1 & 0 & \cdots & 0 \\ -1 & 1 & 0 & 0 \\ 0 & \ddots & \ddots & 0 \\ 0 & 0 & -1 & 1 \end{bmatrix} \begin{bmatrix} \tilde{u}_t \\ \tilde{u}_{t+1} \\ \vdots \\ \tilde{u}_{t+nc} \end{bmatrix} = \Gamma \tilde{U}_e \quad \text{(Eq. 22)}$$

Using the above relations, the predicted value of the objective function to be minimized over the prediction horizon is given by the compact relation:

$$J_{LQ} = (\tilde{Y}_{re} - \tilde{Y}_e)^T (I_{nh} \otimes Q)(\tilde{Y}_{re} - \tilde{Y}_e) + \tilde{U}_e^T \Gamma^T (I_{nc} \otimes R)\Gamma \tilde{U}_e$$

$$= (\tilde{Y}_{re} - C_2 \tilde{U}_e - C_3)^T Q_e (\tilde{Y}_{re} - C_2 \tilde{U}_e - C_3) + \tilde{U}_e^T \Gamma^T R_e \Gamma \tilde{U}_e \quad \text{(Eq. 23)}$$

$$= H_0 + \tilde{U}_e^T H_1 \tilde{U}_e + H_2 \tilde{U}_e$$

The above quadratic objective function is to be minimized with respect to the future control moves $\tilde{U}_e$, subject to all input and output constraints. In particular, the input constraints consist of the min/max magnitude and rate of change constraints:

$$u_{\min} \leq \overline{u}_{t-1} + \widetilde{u}_{t+i} \leq u_{\max}$$
$$\Delta u_{\min} \leq \widetilde{u}_{t+i} - \widetilde{u}_{t+i-1} \leq \Delta u_{\max} \qquad \text{(Eq. 24)}$$

In addition to the above input constraints, which are typically hard constraints, there may be other state/output operational/safety constraints (e.g., minimum stall margin, maximum core speed, combustor blowout). In one formulation of the NMPC, a logic to generate the output reference trajectory and update the constraints for changes in the control actions (fuel flow and A8) is used to enforce these operational/safety constraints. However, it is possible to enforce these operational/safety constraints directly using a linear model for the prediction of the relevant state/output variables over the prediction horizon. For instance, in order to enforce the maximum limit on the core speed, which is a measured variable and the 2nd state in the SRTM, the constraint can be accounted for using the linear discrete-time model:

$$\widetilde{x}_{2,t+i} \leq x_{2\max} - \hat{x}_{2,t} = \widetilde{x}_{2\max} \qquad \text{(Eq. 25)}$$

Note that, unlike the input constraints, these state/output constraints rely on the model predictions and thus are subject to plant-model mismatch over the prediction horizon. Thus, to avoid potential infeasibility, these constraints are typically included as a soft constraint. Thus, the overall QP problem to be solved at each time sample for the NMPC is given below:

$$\min_{\widetilde{U}_e, \beta} \quad J_{LQ} = \widetilde{U}_e^T H_1 \widetilde{U}_e + H_2 \widetilde{U}_e + W\beta$$

subject to the constraints :

$$\widetilde{U}_{e\min} \leq \widetilde{U}_e \leq \widetilde{U}_{e\max} \qquad \text{(Eq. 26)}$$
$$\Delta \widetilde{U}_{e\min} \leq \Gamma \widetilde{U}_e \leq \Delta \widetilde{U}_{e\max}$$
$$\widetilde{Y}_{e,\min}^s - \beta \leq L_1 \widetilde{U}_e + L_2 \leq \widetilde{Y}_{e,\max}^s + \beta$$
$$\beta \geq 0$$

In the above QP formulation, the constant term $H_0$ in the quadratic objective function is ignored, $\beta$ denotes the violation in the soft, output/state constraints, W is the penalty on the soft constraints, $\widetilde{Y}_{e,\min}^s$ and $\widetilde{Y}_{e,\max}^s$ are the minimum and maximum limits on these output/state constraints in terms of deviations from the current values and $L_1\widetilde{U}_e + L_2$ denotes the predicted values of these output/state constraints over the prediction horizon using the linear discrete time model.

The solution of the QP problem in Eq. 26 yields the optimal control trajectory $\widetilde{U}_e$ over the control horizon nc. The optimal values for the first sample, i.e. $\widetilde{u}_t$, yields the absolute value of the control action, $u_t = \overline{u}_{t-1} + \widetilde{u}_t$. This optimal control input is implemented and the QP problem is updated and solved at the next sample along with the EKF.

The quadratic-programming based optimizer and control module rely on the predictions of the engine variables over the future prediction horizon. In the presence of a plant-model mismatch, the model predictions used in the control module can be incorrect and can lead to controller performance degradation or even instability. In embodiments of the present invention, the plant-model mismatch is addressed by including a corrective term on the model used for the prediction. In particular, at each time sample $t$, the term $K(y_t - h(x_{t+1}, p_t, u_t))$, in the EKF (Eq. 19) provides the mismatch between the current output measurements $y_t$ and the model predictions for these outputs $y_t = h(x_{t+1}, p_t, u_t)$ with the current state estimates $x_t$. The current value of this feedback correction term can be used as a constant correction term in the linearized discrete-time model. More specifically, this constant term can be included in the constant vector *F* to obtain the corrected linear model that can be used for prediction:

$$
\begin{aligned}
\widetilde{x}_{t+1} &= A\widetilde{x}_t + B\widetilde{u}_t + (F + L(z_t - \hat{z}_t)) \\
\widetilde{y}_t &= C\widetilde{x}_t
\end{aligned}
\quad .\text{(Eq. 27)}
$$

The above correction term that accounts for the mismatch between the measured and predicted outputs, along with the fact that the quadratic objective function formulation in terms of deviations in the control actions effectively amounts to an integral action with respect to the error between the output reference and the predicted outputs, allows an offset-less control even in the presence of plant-model mismatch.

In another formulation of the QP problem, an infinite prediction horizon may be implemented. In this regard, the control objective function is extended to an infinite prediction horizon, resulting in positive impacts on stability and robustness. The penalty for using the infinite prediction horizon is an increase in the computational cost to achieve a solution. To counter this penalty, a compact and efficient calculation of the infinite horizon term has been developed.

The standard quadratic objective function of Eq. 20 involves a quadratic cost on the tracking error $\Delta\widetilde{y}_{t+i}$ over a prediction horizon $n_h$ and a quadratic cost on the control action $u_{t+i-1}$ over a control horizon $n_c$ ($n_c \ll n_h$), where it is assumed that the control action is constant after the control horizon, i.e. $u_{t+nc-1} = u_{t+nc} = u_{t+nc+1} = \cdots$. A larger control horizon enables improved control performance, however the optimization problem and hence the computational burden grows with the control horizon, thereby limiting the control horizon due to real-time implementation issues. On the other hand, a larger prediction horizon enables improved stability and robustness, hence the prediction horizon is typically chosen to be significantly larger than the control horizon.

In the case of a large prediction horizon $n_h$, the objective function in Eq. 20 involves an expensive calculation of the tracking error terms

$$
\left( \sum_{i=nc+1}^{nh} \Delta\widetilde{y}_{t+i}^T Q \Delta\widetilde{y}_{t+i} \right)
$$

beyond the control horizon $n_c$. This increases the computational burden and limits the choice of the prediction horizon $n_h$ due to real-time implementation issues. The use of infinite prediction horizon improves the stability and performance of the controller without adding undue computational burden. A significantly more efficient alternative is proposed to evaluating the quadratic cost due to the tracking error over an "infinite" prediction horizon with minimal computational overhead.

In particular, consider the quadratic objective function over an infinite prediction horizon:

$$
\begin{aligned}
J_\infty &= \frac{1}{2} \left\{ \sum_{i=1}^{\infty} \Delta\widetilde{y}_{t+i}^T Q \Delta\widetilde{y}_{t+i} + \sum_{i=1}^{i=nc} \Delta u_{t+i-1}^T R \Delta u_{t+i=1} \right\} \\
&= \frac{1}{2} \left\{ \sum_{i=1}^{nc} \Delta\widetilde{y}_{t+i}^T Q \Delta\widetilde{y}_{t+i} + \sum_{i=1}^{i=nc} \Delta u_{t+i-1}^T R \Delta u_{t+i=1} \right\} + \frac{1}{2} \sum_{i=nc+1}^{\infty} \Delta\widetilde{y}_{t+i}^T Q \Delta\widetilde{y}_{t+i} \qquad \text{(Eq. 28)} \\
&= \qquad\qquad J_{nc} \qquad\qquad\qquad + J_{nc,\infty}
\end{aligned}
$$

Note that due to the assumption of constant control action beyond the control horizon (e.g., $u_{t+nc-1} = u_{t+nc} = u_{t+nc+1} = \cdots$), the quadratic cost of the control action based on $\Delta u_{t+nc+i-1}$ is zero and omitted from the objective function. The objective function is factored into two terms, where the first term is the standard objective function $J_{nc}$ corresponding to a prediction horizon $nh$ same as the control horizon $nc$. It is given as a quadratic function of the control action $U = [u_t \cdots u_{t+nc-1}]^T$ :

$$J_{nc} = \frac{1}{2} U^T H_{nc} U + f_{nc}^T U \qquad\qquad (Eq.29)$$

The second term

$$J_{nc,\infty} = \frac{1}{2} \sum_{i=nc+1}^{\infty} \Delta \widetilde{y}_{t+i}^T Q \Delta \widetilde{y}_{t+i}$$

is the remaining quadratic cost on the tracking error beyond the control horizon, and needs to be computed as a function of the control action in a compact and efficient manner. We will henceforth focus on calculating this tracking error term over the infinite horizon. In fact, we will calculate a slightly modified term:

$$\frac{1}{2} \sum_{i=nc+1}^{\infty} \alpha_i \Delta \widetilde{y}_{t+i}^T Q \Delta \widetilde{y}_{t+i}, \qquad\qquad (Eq.\ 30)$$

with an exponentially decaying weighting factor $\alpha_i$ given by $\alpha_{nc+1} = 1$, $\alpha_{i+1} = a\alpha_i$ ($a < 1$). The use of such an exponentially decaying weighting factor is motivated by several factors: (i) Due to modeling errors, model predictions over future get less accurate with increasing horizon, hence the decaying weighting factor reduces the weights on tracking error with increasing samples in future and gives more weight to tracking error in the immediate future. (ii) In some cases, one or more limiting constraints become active and inhibit an offset-less tracking, i.e. the tracking error term $\Delta \widetilde{y}_{t+}$ does not decay to zero over the infinite horizon. In such a case, the exponentially decaying weighting factor $\alpha_i$ (with $a < 1$)) is necessary to ensure that the sum of tracking error terms over an infinite horizon is still bounded and can be minimized.
The tracking error terms $\Delta \widetilde{y}_{t+i}$ in Eq. 20 correspond to the outputs of the system:

$$\begin{aligned}\widetilde{x}_{t+i+1} &= A\widetilde{x}_{t+i} + B\widetilde{u}_{t+nc-1} + F \\ \widetilde{y}_{t+i} &= C\widetilde{x}_{t+i} + D\widetilde{u}_{t+nc-1}\end{aligned}, \qquad (Eq.\ 31)$$

starting from the initial state $\widetilde{x}_{t+nc}$ and constant inputs $\widetilde{u}_{t+nc-1}$. It is assumed that the above dynamic system is stable (i.e., all eigen values of $A$ are within the unit circle, else the states and hence the outputs would go unbounded over the infinite prediction horizon). For such a stable system, the final steady state corresponding to the constant input $\widetilde{u}_{t+nc-1}$ is given by:

$$\begin{aligned}\widetilde{x}_s &= A\widetilde{x}_s + B\widetilde{u}_{t+nc-1} + F \\ \widetilde{y}_s &= C\widetilde{x}_s + D\widetilde{u}_{t+nc-1}\end{aligned}, \qquad (Eq.\ 32)$$

or,

$$\begin{aligned}\widetilde{x}_s &= (I - A)^{-1}[B\widetilde{u}_{t+nc-1} + F] \\ \widetilde{y}_s &= [C(I - A)^{-1}B + D]\widetilde{u}_{t+nc-1} + C(I - A)^{-1}F = K_u \widetilde{u}_{t+nc-1} + K_F\end{aligned}. \qquad (Eq.\ 33)$$

Defining the deviation variables

$$\breve{x}_{t+i} = \widetilde{x}_{t+i} - \widetilde{x}_s, \text{ and } \breve{y}_{t+i} = \widetilde{y}_{t+i} - \widetilde{y}_s,$$

the system dynamics are given by the simplified set of equations:

$$\begin{aligned} \breve{x}_{t+i+1} &= A\breve{x}_{t+i} \\ \breve{y}_{t+i} &= C\breve{x}_{t+i} \end{aligned} \qquad \text{(Eq. 34)}$$

Thus, the infinite horizon tracking error term is given by:

$$
\begin{aligned}
O_{nc,\infty} &= \frac{1}{2}\sum_{i=nc+1}^{\infty}\alpha_i \Delta\widetilde{y}_{t+i}^T Q\Delta\widetilde{y}_{t+i} \\
&= \frac{1}{2}\sum_{i=nc+1}^{\infty}\alpha_i (\widetilde{y}_{r,t+i} - K_F - K_u\widetilde{u}_{t+nc-1} - C\breve{x}_{t+i})^T Q(\widetilde{y}_{r,t+i} - K_F - K_u\widetilde{u}_{t+nc-1} - C\breve{x}_{t+i}) \\
&= \frac{1}{2}\sum_{i=nc+1}^{\infty}\alpha_i (\widetilde{y}_{r,t+i} - K_F)^T Q(\widetilde{y}_{r,t+i} - K_F) + \frac{1}{2}\widetilde{u}_{t+nc-1}^T K_u^T Q K_u \widetilde{u}_{t+nc-1}\sum_{i=nc+1}^{\infty}\alpha_i + \sum_{i=nc+1}^{\infty}(\alpha_i^{0.5}\breve{x}_{t+i})^T C^T Q C(\alpha_i^{0.5}\breve{x}_{t+i}) \\
&\quad - (\widetilde{y}_{r,t+i} - K_F)^T Q K_u\widetilde{u}_{t+nc-1}\sum_{i=nc+1}^{\infty}\alpha_i - \sum_{i=nc+1}^{\infty}\alpha_i(\widetilde{y}_{r,t+i} - K_F - K_u\widetilde{u}_{t+nc-1})^T Q C\breve{x}_{t+i}
\end{aligned}
$$

$$\text{(Eq. 35)}$$

Note that in the above equation, the first term is a constant, which is independent of the control action and can be omitted from the optimization objective. Moreover, the term

$$(\widetilde{y}_{r,t+i} - K_F - K_u\widetilde{u}_{t+nc-1})$$

denotes the steady state error between the output references and the controlled outputs, which will be assumed to be zero. Also, the summation term

$$\sum_{i=nc+1}^{\infty}(\alpha_i^{0.5}\breve{x}_{t+i})^T C^T Q C(\alpha_i^{0.5}\breve{x}_{t+i})$$

is evaluated in a compact closed-form as

$$= \alpha_{t+nc+1}\breve{x}_{t+nc+1}^T \overline{Q}\breve{x}_{t+nc+1},$$

where $\overline{Q}$ is a symmetric positive definite matrix that is the solution of the Lyapunov equation:

$$\overline{Q}-A^T a^{0.5}\overline{Q}a^{0.5}A=C^T Q C. \qquad \text{(Eq.36)}$$

Finally,

$$\breve{x}_{t+nc+1} = \widetilde{x}_{t+nc+1} - \widetilde{x}_s = \widetilde{x}_{t+nc+1} - (I-A)^{-1}(B\widetilde{u}_{t+nc-1} + F),$$

where the state $\widetilde{x}_{t+nc} = G_{t+nc}U + V_{t+nc}$ is a function of the control inputs $U$ and the free response corresponding to $F$. Thus,

$$\widetilde{x}_{t+nc+1} = A\widetilde{x}_{t+nc} + F = AG_{t+nc}U + AV_{t+nc} + F = G_{t+nc+1}U + V_{t+nc+1} \quad \text{(Eq. 37)}$$

and

$$\breve{x}_{t+nc+1} = \{G_{t+nc+1} - [0 \quad \cdots \quad 0 \quad (I-A)^{-1}B]\}U + \{V_{t+nc+1} - (I-A)^{-1}F\} = \breve{G}_{t+nc+1}U + \breve{V}_{t+nc+1}$$
$$\text{(Eq. 38)}$$

Substituting these relations in Eq. 29, the following compact relation is obtained for the infinite horizon tracking error term:

$$O_{nc\infty} = \frac{1}{2}\widetilde{u}_{t+nc-1}^T K_u^T Q K_u \widetilde{u}_{t+nc-1}\left(\frac{\alpha_{nc+1}}{1-a}\right) + \frac{1}{2}\alpha_{nc+1}[\breve{G}_{t+nc+1}U + \breve{V}_{t+nc+1}]^T \overline{Q}[\breve{G}_{t+nc+1}U + \breve{V}_{t+nc+1}] - \left(\frac{\alpha_{nc+1}}{1-a}\right)(\breve{y}_{r,t+nc} - K_F)^T Q K_u \widetilde{u}_{t+nc-1}$$

$$= \frac{1}{2}U^T H_{nc\infty}U + f_{nc\infty}^T U$$

$$\text{(Eq. 39)}$$

which is another quadratic expression in the control action $U$ similar to the objective function $O_{nc}$ over the control horizon in Eq. 29. Thus, evaluating the matrices:

$$H_{nc\infty} = \alpha_{nc+1}\breve{G}_{t+nc+1}^T \overline{Q}\breve{G}_{t+nc+1} + \left(\frac{\alpha_{nc+1}}{1-a}\right)\begin{bmatrix} 0 & \cdots & 0 \\ \vdots & & \vdots \\ 0 & \cdots & K_u^T Q K_u \end{bmatrix}, f_{nc\infty} = \breve{G}_{t+nc+1}^T \overline{Q}\breve{V}_{t+nc+1} - \begin{bmatrix} 0 \\ \vdots \\ 0 \\ \left(\frac{\alpha_{nc+1}}{1-a}\right)K_u^T Q(\breve{y}_{r,t+nc} - K_F) \end{bmatrix},$$

$$\text{(Eq. 40)}$$

the infinite horizon tracking error term in Eq. 39 can be obtained in a compact and efficient manner. Finally, note that $\alpha_{nc+1} = 1$ and the forgetting factor $a < 1$ can be tuned to shorten or lengthen the extent of the infinite horizon tracking error that contributes to the overall objective function and the rate of decay of their relative weighting. A larger value of a will lengthen the effective terms in the infinite horizon thereby increasing the stability characteristics. However, in the presence of modeling errors, the undue weight on distant future tracking errors will degrade the transient performance. A judicious tuning of the factor a will enable increased stability as well as improved performance.

The present application is related to U.S. Patent Application Serial No. 10/306,433, GE Dkt. No. 124447, entitled "METHODS AND APPARATUS FOR MODEL PREDICTIVE CONTROL OF AIRCRAFT GAS TURBINE ENGINES," filed November 27, 2002, and U.S. Patent Application Serial No. 10/293,078, GE Dkt. No. 126067, entitled "ADAPTIVE MODEL-BASED CONTROL SYSTEMS AND METHODS FOR CONTROLLING A GAS TURBINE," filed November 13, 2002.

Exemplary embodiments of control systems and methods are described above in detail. The systems are not limited to the specific embodiments described herein, but rather, components of each system may be utilized independently and separately from other components described herein. Each system component can also be used in combination with other system components.

**Claims**

1. A method of controlling a gas turbine engine (110), said engine (110) having sensors to detect one or more parameters and actuators adapted to respond to commands, comprising:

   receiving data from said sensors of said engine for one or more measured or sensed parameters;
   estimating a state of said engine (110) by estimating one or more unmeasured or unsensed parameters using the data from said sensors and a predictive model (130) of said engine (110); and
   generating commands for said actuators based on said state using an optimization algorithm (150); and transmitting said commands to said engine (110).

2. The method of claim 1, wherein said step of estimating uses an Extended Kalman Filter (120).

3. The method of claim 2, wherein said Extended Kalman Filter (120) is adapted to correct a mismatch between said model (130) and said engine (110).

4. The method of claim 1, wherein said optimization algorithm (150) is a quadratic programming algorithm adapted to optimize an objective function under a set of constraints, said objective function being based on at least one of said unmeasured or unsensed parameters.

5. The method of claim 4, wherein optimization algorithm (150) uses an infinite control horizon to optimize said objective function, said infinite control horizon being implemented by approximating an infinite horizon tracking error.

6. A system for controlling a gas turbine engine (110), said engine (110) having sensors to detect one or more parameters and actuators adapted to respond to commands, comprising:

   a state estimator (120) adapted to estimate a state of said engine (110) by estimating one or more unmeasured or unsensed parameters using data from said sensors of said engine (110) for one or more measured or sensed parameters, said estimator (120) including a model (130) of said engine (110); and
   a control module (140) adapted to generate commands for said actuators based on said state, said control module (140) including an optimization algorithm (150) for determining said commands.

7. The system of claim 6, wherein said state estimator (120) uses an Extended Kalman Filter.

8. The system of claim 7, wherein said Extended Kalman Filter is adapted to correct a mismatch between said model (130) and said engine (110).

9. The system of claim 6, wherein said optimization algorithm (150) is a quadratic programming algorithm adapted to optimize an objective function under a set of constraints, said objective function being based on at least one of said unmeasured or unsensed parameters.

10. The system of claim 9, wherein optimization algorithm (150) uses an infinite control horizon to optimize said objective function, said infinite control horizon being implemented by approximating an infinite horizon tracking error.

FIGURE 1

**FIGURE 2**

**FIGURE 3**

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/065135 A (CAMBRIDGE CONSULTANTS LIMITED; BOWYER, ROBERT, OWEN) 7 August 2003 (2003-08-07) * page 12, line 1 - page 15, line 28 * | 1,4,6,9 | G05B13/04 |
| Y | * page 23, line 18 - page 32, line 5 * ----- | 2,3,5,7, 8,10 | |
| Y | US 6 526 358 B1 (MATHEWS, JR. HARRY KIRK ET AL) 25 February 2003 (2003-02-25) * column 4, line 1 - line 10 * ----- | 2,3,7,8 | |
| Y | US 6 208 914 B1 (WARD DAVID G ET AL) 27 March 2001 (2001-03-27) * column 7, line 6 - line 13 * ----- | 5,10 | |
| A | EP 1 298 053 A (COLTEC INDUSTRIES INC) 2 April 2003 (2003-04-02) * paragraph [0027] - paragraph [0034] * ----- | 1,6 | |
| A | US 6 056 781 A (WASSICK ET AL) 2 May 2000 (2000-05-02) * column 5, line 27 - column 9, line 61 * ----- | 1,6 | TECHNICAL FIELDS SEARCHED (Int.Cl.7) G05B |

The present search report has been drawn up for all claims

| Place of search | Date of completion of the search | Examiner |
|---|---|---|
| The Hague | 4 May 2005 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 25 8055

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2005

| Patent document cited in search report | | Publication date | Patent family member(s) | | Publication date |
|---|---|---|---|---|---|
| WO 03065135 | A | 07-08-2003 | GB<br>EP<br>WO | 2388922 A<br>1481295 A1<br>03065135 A1 | 26-11-2003<br>01-12-2004<br>07-08-2003 |
| US 6526358 | B1 | 25-02-2003 | NONE | | |
| US 6208914 | B1 | 27-03-2001 | NONE | | |
| EP 1298053 | A | 02-04-2003 | US<br>EP<br>JP | 2003094001 A1<br>1298053 A2<br>2003148171 A | 22-05-2003<br>02-04-2003<br>21-05-2003 |
| US 6056781 | A | 02-05-2000 | US | 5740033 A | 14-04-1998 |

EPO FORM P0459

For more details about this annex : see Official Journal of the European Patent Office, No. 12/82